(19) Europäisches Patentamt
European Patent Office
Office européen des brevets

(11) **EP 2 222 485 B1**

(12) **EUROPÄISCHE PATENTSCHRIFT**

(45) Veröffentlichungstag und Bekanntmachung des Hinweises auf die Patenterteilung:
**07.08.2019  Patentblatt 2019/32**

(21) Anmeldenummer: **08860001.0**

(22) Anmeldetag: **27.11.2008**

(51) Int Cl.:
**B60C 23/06** $^{(2006.01)}$

(86) Internationale Anmeldenummer:
**PCT/EP2008/066299**

(87) Internationale Veröffentlichungsnummer:
**WO 2009/074458 (18.06.2009 Gazette 2009/25)**

(54) **VERFAHREN ZUR INDIREKTEN REIFENDRUCKÜBERWACHUNG UND REIFENDRUCKÜBERWACHUNGSSYSTEM**

METHOD FOR INDIRECTLY MONITORING TIRE PRESSURE AND TIRE PRESSURE MONITORING SYSTEM

PROCÉDÉ DE SURVEILLANCE INDIRECTE DE LA PRESSION DES PNEUS ET SYSTÈME DE SURVEILLANCE DE LA PRESSION DES PNEUS

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **10.12.2007   DE 102007059648**
**11.11.2008   DE 102008056664**

(43) Veröffentlichungstag der Anmeldung:
**01.09.2010  Patentblatt 2010/35**

(73) Patentinhaber: **Continental Teves AG & Co. OHG**
**60488 Frankfurt am Main (DE)**

(72) Erfinder:
• **IRTH, Markus**
**55252 Mainz-Kastel (DE)**
• **FISCHER, Daniel**
**65824 Schwalbach (DE)**
• **KÖBE, Andreas**
**64625 Bensheim (DE)**
• **SUSSMANN, Christian**
**65812 Bad Soden (DE)**

(56) Entgegenhaltungen:
**EP-A1- 1 260 389        US-A- 5 553 491**
**US-A1- 2002 059 826**

**Beschreibung**

Die Erfindung betrifft ein Verfahren gemäß Oberbegriff von Anspruch 1 und ein Reifendrucküberwachungssystem gemäß Oberbegriff von Anspruch 14.

Es sind verschiedene Reifendrucküberwachungssysteme bekannt, welche entweder auf Basis direkt messender Sensoren arbeiten oder durch Auswertung von Drehzahl- oder Schwingungseigenschaften der Fahrzeugräder einen abnormalen Reifendruck erkennen.

Aus der DE 100 58 140 A1 ist ein so genanntes indirekt messendes Reifendrucküberwachungssystem bekannt, welches durch Auswertung der Raddrehbewegung einen Reifendruckverlust detektiert (DDS: Deflation Detection System).

Aus der EP 0 578 826 B1 ist ein Reifendruckmesser bekannt, welcher auf Basis von Reifenschwingungen einen Druckverlust in einem Reifen ermittelt, wobei aus den Reifenschwingungen mindestens eine Resonanzfrequenzkomponente extrahiert wird. Ein Verfahren zur indirekten Reifendrucküberwachung, welches ein auf der Auswertung der Raddrehbewegung basierendes indirekt messendes Reifendrucküberwachungssystem unter Berücksichtigung der Torsionseigenfrequenz der Reifen verbessert, wird in der Patentanmeldung DE 10 2005 004 910 A1 offenbart. Ein Reifenüberwachungssystem mit kombinierter Auswertung von Raddrehzahlinformationen und einer Achsfrequenzanalyse, in welcher die vertikale Beschleunigung der Räder durch Sensoren gemessen und berücksichtigt wird, ist in der WO 03/031990 A1 beschrieben.

Ein Verfahren zur indirekten Reifendrucküberwachung gemäß dem Oberbegriff des Anspruchs 1 ist aus der EP1260389 A1 bekannt. Weitere Verfahren werden in US5553491 und US2002/0059826 A1 offenbart.

Aus dem Stand der Technik bekannte, indirekte Systeme zur Reifendruckverlusterkennung greifen zur Berechnung einer Indikatorgröße für einen Reifendruckverlust (Druckverlusterkennungsgröße) auf die Raddrehzahlinformationen zurück, wobei die Veränderung der Eigen- bzw. Resonanzfrequenz der torsionalen Schwingung zwischen Felge und Gürtel bei einen Druckverlust als Indikatorgröße herangezogen wird, welche in einem Frequenzspektrum des Raddrehzahlsignals beobachtbar ist. Diese Veränderung basiert auf der Verringerung der torsionalen Federkonstante zwischen Gürtel und Felge bei verringertem Druck im Reifen. Die Verschiebung/Veränderung der Resonanzfrequenz eines aktuellen Frequenzspektrums der Raddrehzahl gegenüber einer bei korrektem Reifenluftdruck eingelernten Resonanzfrequenz wird dann zur Druckverlusterkennung herangezogen.

Aufgabe der Erfindung ist es, ein alternatives Verfahren zur indirekten Reifendrucküberwachung oder ein Verfahren zur Erkennung eines Schadens einer Radaufhängung bereitzustellen, in welchem das Schwingungsverhalten mindestens eines Rades ausgewertet wird.

Diese Aufgabe wird erfindungsgemäß durch das Verfahren nach Anspruch 1 gelöst.

Unter dem Begriff "Raddrehzahl" wird erfindungsgemäß eine Verallgemeinerung des Begriffs verstanden. So werden unter dem Begriff auch alle anderen Raddrehbewegungsgrößen verstanden, welche direkt mit der Raddrehzahl verknüpft sind, wie z.B. Umlaufzeit, Winkelgeschwindigkeit oder Drehgeschwindigkeit.

Der Erfindung liegt der Gedanke zugrunde, einen Druckverlust an einem Rad und/oder einen Schaden an einer Radaufhängung durch Vergleich einer aktuell bestimmten Druckverlusterkennungsgröße mit einer eingelernten Druckverlusterkennungsgröße zu erkennen, wobei die Druckverlusterkennungsgröße aus mindestens zwei Maßgrößen bestimmt wird, welche aus dem Raddrehzahlsignal des Rades bestimmt werden und welche jeweils ein Maß für die Ausprägung einer Frequenz oder eines Frequenzbereiches in dem Schwingungsverhalten des Rades darstellen.

Bei den Frequenzen handelt es sich vorteilhafterweise um unterschiedliche Resonanzfrequenzen einer Radtorsionsschwingung und/oder einer Radvertikalschwingung bzw. bei den Frequenzbereichen handelt es sich vorteilhafterweise um unterschiedliche Frequenzbereiche um die Resonanzfrequenzen einer Radtorsionsschwingung und/oder einer Radvertikalschwingung. Diese Resonanzfrequenzen spiegeln die torsionale Federkonstante zwischen Reifengürtel und Felge bzw. die Feder-/Dämpferwirkung des Reifens bzgl. einer Vertikalbewegung wieder und hängen damit vom Reifendruck ab.

Bevorzugt wird die Druckverlusterkennungsgröße aus einem Verhältnis der beiden Maßgrößen gebildet. Hierdurch werden Einflüsse durch die Straßenanregung minimiert und so Fehlwarnungen vermieden.

Bei der Berechung der Druckverlusterkennungsgröße wird bevorzugt zusätzlich noch die Fahrzeuggeschwindigkeit einbezogen, um deren Einfluss auf die Druckverlusterkennungsgröße direkt zu berücksichtigen.

Zur Bestimmung einer Maßgröße wird bevorzugt das Raddrehzahlsignal mit einem Bandpassfilter mit Grenzfrequenzen um die entsprechende Eigenfrequenz gefiltert. Als Maß für die Energie in diesem Bereich wird besonders bevorzugt die Varianz des gefilterten Signals herangezogen. Zur Bestimmung der Maßgrößen ist dann keine Bestimmung eines Frequenzspektrums des Raddrehzahlsignals notwendig, so dass auch kein entsprechender Speicherplatz zur Berechnung eines Frequenzspektrums benötigt wird.

Gemäß der Erfindung werden für drei verschiedene Frequenzen und/oder Frequenzbereiche Maßgrößen bestimmt und diese zur Druckverlust- und/oder Schadenserkennung herangezogen, um einen möglichst breiten Bereich an Radschwingungen bei der Überwachung zu berücksichtigen. Besonders bevorzugt werden zwei Resonanzfrequenzen bzw. Resonanzfrequenzbereiche von Radtorsionsschwingungen und eine Resonanzfrequenz bzw. ein Resonanzfrequenzbereich einer Radvertikalschwingung ausgewertet, da diese Resonanzfrequenzen unterschiedliches Verhalten bzgl. ihrer Ausprägung bei einem Reifendruckverlust und/oder bei verschiedenen Störeinflüssen, wie z.B. Straßenanregungen, zeigen.

Für eine möglichst umfassende Berücksichtigung des Einflusses von Straßenanregungen und sonstigen Störeffekten wird die Druckverlusterkennungsgröße aus einem Verhältnis zweier Maßgrößen gebildet und zusätzlich die Druckverlusterkennungsgröße in Abhängigkeit von der dritten Maßgröße eingelernt. Um auch bzgl. der der dritten Maßgröße die Einflüsse durch Straßenanregungen zu minimiert, wird die Druckverlusterkennungsgröße besonders bevorzugt in Abhängigkeit von einem Verhältnis zweier Maßgrößen, welches die dritte Maßgröße enthält, eingelernt.

Um die Fahrzeuggeschwindigkeit, welche ein Maß für die Radanregung ist, direkt zu berücksichtigen, wird die Druckverlusterkennungsgröße bevorzugt aus einem Verhältnis zweier Maßgrößen und der Fahrzeuggeschwindigkeit berechnet. Die Fahrzeuggeschwindigkeit steht üblicherweise im Rahmen eines Schlupfregelsystems zur Verfügung oder wird mit einem Sensor gemessen.

Für eine zuverlässige Überwachung ist es vorteilhaft, wenn mindestens zwei der betrachteten Frequenzen und/oder Frequenzbereiche derart gewählt sind, dass die entsprechenden Maßgrößen bezüglich ihrer Werte eine unterschiedliche Änderung oder bezüglich ihrer Änderung ein gegenläufiges Verhalten bei einem Reifendruckverlust/Radaufhängungsschaden zeigen.

Um den Auswertungsaufwand und damit die Kosten der Realisierung gering zu halten, wird eine Maßgröße bevorzugt mittels Bandpassfilterung des Raddrehzahlsignals bestimmt, wobei die Varianz des gefilterten Signals als Maßgröße verwendet wird. Die Grenzfrequenzen des jeweiligen Bandpassfilters entsprechen dem betrachtetet Frequenzbereich. Um statistische Schwankungen zu beseitigen, wird besonders bevorzugt noch eine Mittelwertbildung bzw. -filterung der Varianz durchgeführt.

Gemäß einer bevorzugten Ausführungsform des erfindungsgemäßen Verfahrens ergibt sich eine Maßgröße als ein Amplitudenwert des Frequenzspektrums des Raddrehzahlsignals bei einer vorgegebenen oder bestimmten Frequenz. Hierdurch ist die Auswertung, abgesehen von der Berechnung des Frequenzspektrums, einfach und somit kostengünstig realisierbar. Dies ist insbesondere dann vorteilhaft, wenn das Frequenzspektrum sowie im Rahmen eines anderen Verfahrens berechnet werden muss.

Gemäß einer anderen bevorzugten Ausführungsform des erfindungsgemäßen Verfahrens eine Maßgröße durch Integration oder Mittelung der Amplitudenwerte des Frequenzspektrums des Raddrehzahlsignals in einem vorgegebenen oder bestimmten Frequenzbereich bestimmt. Für diese Art der Auswertung sind zwar mehr Auswertungsschritte, z.B. die Zwischenspeicherung von Werten, notwendig, jedoch hängt die bestimmte Maßgröße dann von vielen Amplitudenwerten ab, so dass ein eventuell fehlerhaft bestimmter Amplitudenwert weniger stark zur Verfälschung der Maßgröße beiträgt.

Für eine einfache und kostengünstige Auswertung sind die Frequenzen und/oder Frequenzbereiche zur Bestimmung der Maßgrößen bevorzugt vorgegeben.

Um die Bestimmung der Maßgrößen an das jeweilige Fahrzeug anzupassen und so eine zuverlässigere Druckverlust-/ Schadenserkennung zu erzielen, werden die Resonanzfrequenz bzw. die Frequenzbereiche, in denen eine Resonanzfrequenz liegt, bevorzugt aus einem ermittelten Frequenzspektrum des Raddrehzahlsignals bestimmt. Werden nur die Resonanzfrequenzen aus dem ermittelten Frequenzspektrum bestimmt, so können entsprechende Frequenzbereiche aus ermittelter Resonanzfrequenz und vorgegebenem Frequenzintervall bestimmt werden. Ebenso ist es bevorzugt, die Resonanzfrequenzen bzw. Frequenzbereiche aus Modellparametern mindestens eines Modells oder mindestens einer modellbasierten Gleichung zu ermitteln, wobei die Modellparameter durch Parameterschätzung unter Auswertung des Raddrehzahlsignals bestimmt werden. Dies ist insbesondere in solchen Fällen vorteilhaft, in denen das erfindungsgemäße Verfahren zusätzlich zu einem Reifendrucküberwachungssystem durchgeführt wird, dessen Druckverlusterkennung auf solche einem Modell oder einer modellbasierten Gleichung beruht, da in diesen Fällen die Modellparameter bereits vorliegen.

Während der Einlernphase wird bevorzugt eine Abhängigkeit zwischen einer Maßgröße (oder einem Verhältnis von Maßgrößen) und einer anderen Maßgröße (oder einem (anderen) Verhältnis von Maßgrößen) eingelernt. Die gelernte Abhängigkeit wird dann in der Vergleichs- oder Druckverlustüberwachungsphase zur Kompensation der entsprechenden Größe (Maßgröße oder Verhältnis von Maßgrößen) bezüglich der anderen Größe (Maßgröße oder Verhältnis von Maßgrößen) herangezogen. Hierdurch wird die Erkennung verbessert, da wechselseitige Abhängigkeiten berücksichtigt/kompensiert werden können. Besonders bevorzugt wird die Druckverlusterkennungsgröße, welche aus einem Verhältnis von Maßgrößen bestimmt wird, in Abhängigkeit von einem anderen Verhältnis von Maßgrößen eingelernt. In der Vergleichsphase wird dann anhand der gelernten Abhängigkeit eine Kompensation der aktuellen Druckverlusterkennungsgröße durchgeführt und die kompensierte aktuelle Druckverlusterkennungsgröße zum Vergleich mit der eingelernten Druckverlusterkennungsgröße herangezogen. Hierdurch werden Nichtlinearitäten in den Komponenten der Radaufhängung berücksichtigt.

Ebenso werden in der Einlernphase bevorzugt die Abhängigkeit einer Maßgröße (oder eines Verhältnisses von Maßgrößen) von der Fahrzeuggeschwindigkeit und/oder einer Maßgröße (oder eines Verhältnisses von Maßgrößen) von einer Temperatur eingelernt und in der Vergleichsphase berücksichtigt, da sowohl Geschwindigkeit als auch Temperatur einen Einfluss auf die Radschwingung haben.

Die Abhängigkeit zwischen einer Größe und einer anderen Größe wird bevorzugt in Form eines funktionalen Zusammenhangs mit Parametergrößen vorgegeben, wobei die Parametergrößen während der Einlernphase bestimmt werden. Hierzu werden Wertepaare der Größen abgespeichert und die Parametergrößen mit Hilfe der Wertepaare bestimmt.

In einem weniger rechenaufwändigen Verfahren wird die Abhängigkeit zwischen einer ersten Größe und einer zweiten Größe bestimmt, indem die erste Größe in Werte-Intervallen der zweiten Größe eingelernt wird. Ein Vergleich einer aktuellen ersten Größe erfolgt dann mit dem entsprechenden eingelernten Wert der ersten Größe bei gleichem Wert der zweiten Größe.

Gemäß einer Weiterbildung der Erfindung wird das erfindungsgemäße Verfahren mit einem anderen Verfahren zur indirekten Reifendrucküberwachung kombiniert. So wird eine zuverlässigere Druckverlusterkennung möglich. Besonders vorteilhaft ist eine Kombination mit einem Verfahren dessen Druckverlusterkennungsgröße eine Resonanzfrequenz ist. Hierbei müssen dann viele der zur Erkennung notwendigen Größen, z.B. das Frequenzspektrum, nur einmal bestimmt werden und können dann von beiden Verfahren herangezogen werden.

Da Reifendrucküberwachungsverfahren oftmals nur unter bestimmten Bedingungen/Gegebenheiten eine zuverlässige Druckverlusterkennung liefern, ist es bevorzugt, in Abhängigkeit von der Fahrzeuggeschwindigkeit und/oder den Werten der Maßgrößen die Druckverlusterkennung anhand des einen oder des anderen Verfahrens zur indirekten Reifendrucküberwachung durchzuführen oder die Bewarnung durch gewichtet Kombination der Ergebnisse der beiden Verfahren durchzuführen, wobei die Gewichtung in Abhängigkeit von der Fahrzeuggeschwindigkeit und/oder den Werten der Maßgrößen geändert wird.

Ein Vorteil des erfindungsgemäßen Verfahrens liegt darin, dass im Vergleich zu anderen Verfahren eine zuverlässigere Bewarnung möglich ist, da unterschiedliche Frequenzbereiche von Schwingungen und/oder Arten von Schwingungen der Räder in die Überwachung einfließen. Hierdurch wird auch eine Kompensation von verschiedenen Störeffekten möglich. Ein weiterer Vorteil des erfindungsgemäßen Verfahrens ist es, dass durch die Betrachtung eines Verhältnisses von Maßgrößen der Störeinfluss der Straßenanregung auf einfache Art und Weise zumindest teilweise kompensiert wird.

Die Erfindung betrifft auch ein Reifendrucküberwachungssystem, in welchem ein vorstehend beschriebenes Verfahren durchgeführt wird.

Weitere bevorzugte Ausführungsformen ergeben sich aus den Unteransprüchen und der nachfolgenden Beschreibung an Hand von Figuren.

Es zeigen schematisch

Fig. 1    ein Flussdiagramm eines ersten Ausführungsbeispiels eines erfindungsgemäßen Verfahrens,

Fig. 2    ein Flussdiagramm zur Bestimmung von Maßgrößen gemäß eines zweiten Ausführungsbeispiels eines erfindungsgemäßen Verfahrens, und

Fig. 3    ein Flussdiagramm eines vierten Ausführungsbeispiels eines erfindungsgemäßen Verfahrens,

Fig. 4    ein erstes Modell eines Rades,

Fig. 5    einen beispielhaften Zusammenhang zwischen Übertragungsfunktion und Frequenz für verschiedene Reifendrucke,

Fig. 6    ein zweites Modell eines Rades,

Fig. 7    einen beispielhaften Zusammenhang zwischen Übertragungsfunktion und Frequenz für verschiedene Werte von a/v, und

Fig. 8    beispielhafte Abhängigkeiten zwischen Drehmoment und Schlupf.

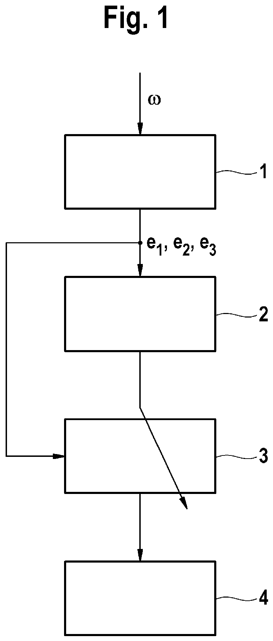

Fig. 1 zeigt schematisch ein Flussdiagramm eines ersten Ausführungsbeispiels eines erfindungsgemäßen Verfahrens. Aus einem Raddrehzahlsignal $\omega$ eines Rades werden in Block 1 mindestens zwei, beispielsgemäß drei Maßgrößen e1, e2 und e3 durch ein Energieauswerteverfahren bestimmt. Jede Maßgröße stellt ein Maß für die Ausprägung einer Frequenz oder eines Frequenzbereiches in dem Schwingungsverhalten des Rades dar. In Block 2 wird in einer Lernphase das Schwingungsverhalten des Reifens bei korrektem bzw. vorgegebenem Luftdruck ermittelt und die Maßgrößen und/oder eine aus Maßgrößen bestimmte Druckverlusterkennungsgröße DVE eingelernt. Nach dem Einlernen findet in Block 3 eine Auswertung der Maßgrößen und/oder der aus Maßgrößen bestimmten Druckverlusterkennungsgröße DVE statt. Durch Vergleich einer aktuell bestimmten Druckverlusterkennungsgröße $DVE_{akt}$ mit einer eingelernten Druckverlusterkennungsgröße $DVE_{soll}$ wird ein Druckverlust an dem Reifen des Rades oder ein Schaden der Radaufhängung erkannt. Wenn die Abweichung von aktueller Druckverlusterkennungsgröße $DVE_{akt}$ und eingelernter Druckverlusterkennungsgröße $DVE_{soll}$ eine Detektionsschwelle überschreitet, wird in Block 4 eine Warnung an den Fahrer ausgegeben.

Beispielsgemäß wird ein Verhältnis von Maßgrößen, z.B. das Verhältnis e2/e3 der beiden Maßgrößen e2 und e3 als Druckverlusterkennungsgröße DVE herangezogen:

$$DVE = \frac{e2}{e3} \tag{1}$$

Die Erfindung basiert also darauf, dass eine Veränderung der torsionalen und/oder der radialen Federkonstante des Reifens bei einem Druckverlust in einer Veränderung und/oder Umverteilung der Energien im Schwingungsspektrum der Raddrehzahl resultiert. So ändern sich z.B. die Signalamplituden der zugehörigen Eigen- bzw. Resonanzfrequenz (d.h. die Höhe des Maximums / der Amplitude in einem Frequenzspektrum bei der Eigen- bzw. Resonanzfrequenz).

Daher werden beispielsgemäß die spektralen Energien oder Signalamplituden (d.h. die Ausprägung der Eigenfrequenz, insbesondere der Energiegehalt des Frequenzspektrums der Raddrehzahl im Bereich einer Eigenfrequenz) zur Bestimmung eines Reifenluftdrucks bzw. Reifenluftdruckverlustes oder zur Erkennung eines Schadens an der Radaufhängung ausgewertet.

Eine Maßgröße kann z.B. durch Integration des Spektrums über einen begrenzten Frequenzbereich bestimmt werden.

Da die spektralen Energien jedoch nicht nur vom Luftdruck, sondern auch von weiteren (Stör)Größen abhängen, sollten die Einflüsse dieser Störgrößen berücksichtigt werden. Eine Nichtbeachtung dieser Einflüsse kann zu Fehlwarnungen oder aber zu ausbleibenden berechtigten Warnungen führen.

Wesentliche Störgrößen, die beispielsgemäß berücksichtigt werden, sind:

- Straßeneinflüsse/Reibwert,
- Geschwindigkeit und
- Beladung.

Beispielsgemäß wird eine Überwachung des Reifenluftdrucks mit drei Maßgrößen e1, e2, e3 durchgeführt, welche die Resonanzamplituden bzw. Ausprägungen dreier relevanter Schwingungen im Raddrehzahlsignal beschreiben. Die Resonanzamplituden können auch als Signalenergien betrachtet werden.

Bei den drei genannten Schwingungen handelt es sich beispielsgemäß um

- eine Radvertikalschwingung,
- eine erste Radtorsionsschwingung und
- eine zweite Radtorsionsschwingung.

Gemäß einem Ausführungsbeispiel sind die jeweiligen Frequenzbereiche, aus welchen die Maßgrößen e1, e2, e3 bestimmt werden, vorgegeben. Z.B. wird für die Radvertikalschwingung ein Resonanzbereich von ca. 10 bis 20 Hz, für die erste Radtorsionsschwingung ein Resonanzbereich von ca. 30 bis 60 Hz, und für die zweite Radtorsionsschwingung ein Resonanzbereich von ca. 70 bis 110 Hz angesetzt.

Gemäß einem anderen Ausführungsbeispiel werden die relevanten Frequenzbereiche für das jeweilige Fahrzeug individuell bestimmt. Hierzu können verschiedene Verfahren eingesetzt werden. Zur genaueren Bestimmung, welche Frequenzintervalle zur Berechnung der Maßgrößen herangezogen werden, werden z.B. erst die tatsächlichen Resonanzfrequenzen $f_{Eigen1}$, $f_{Eigen2}$, $f_{Eigen3}$ für das entsprechende Fahrzeug ermittelt und dann zur Festlegung der Frequenzintervalle herangezogen. Die relevanten Frequenzbereiche werden z.B. als Bereiche einer oder mehrerer unterschiedlicher, vorgegebener Frequenzbreiten $\Delta f_{Eigeni}$ um die bestimmten Resonanzfrequenzen $f_{Eigeni}$ gewählt ($f_{Eigeni} \pm \Delta f_{Eigeni}/2$ mit i=1,2 oder 3).

Vorgegebene Frequenzbreiten (z.B. $\Delta f_{Eigen1}$ um $f_{Eigen1}$) können aber auch zunächst als Startwerte für die Frequenzbereiche angenommen werden. Die Frequenzbereiche können dann, ausgehend von den Startwerten, auch an das vorliegende Fahrzeug, d.h. an die bestimmten Frequenzspektren, angepasst werden. So ist eine fahrzeugspezifische Auswertung möglich.

Die Resonanzfrequenzen $f_{Eigen1}$, $f_{Eigen2}$, $f_{Eigen3}$ der drei Schwingungen werden beispielsgemäß über eine Parameterschätzung der entsprechenden Übertragungsfunktionen (z.B. Gleichung (4) und (9) weiter unten) im jeweiligen Frequenzbereich ermittelt. Hierzu wird das Raddrehzahlsignal $\omega$ und dessen Ableitung(en) herangezogen. Aus den geschätzten ModellParametern wird die Resonanzfrequenz bestimmt (siehe z.B. Gleichung (5) und (6)).

Alternativ können die Resonanzfrequenzen $f_{Eigen1}$, $f_{Eigen2}$, $f_{Eigen3}$ über eine Spektralanalyse des Raddrehzahl-signals $\omega$ als Maxima in den jeweiligen Frequenzbereichen gefunden werden.

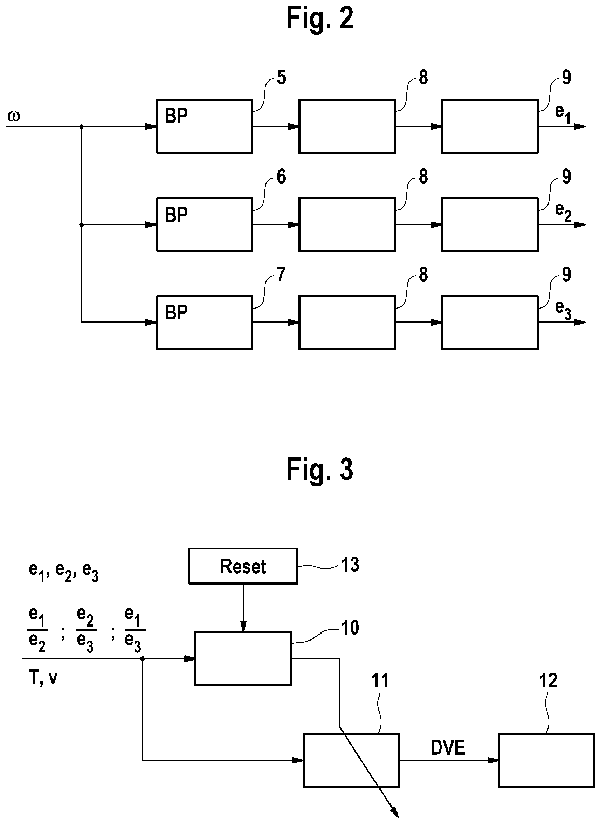

In Fig. 2 ist eine Bestimmung der Maßgrößen e1, e2, e3 gemäß einem zweiten Ausführungsbeispiel eines erfindungsgemäßen Verfahrens schematisch als Flussdiagramm dargestellt. Das Raddrehzahlsignal $\omega$ wird in den vor-gegebenen oder bestimmten Frequenzbereichen mit jeweils einem Bandpassfilter BP gefiltert. Beispielsgemäß wird in Block 5 der Frequenzbereich von 10-20 Hz, in Block 6 der Frequenzbereich von 30-60 Hz und in Block 7 der Frequenzbereich von 70-110 Hz ausgefiltert. In den Blöcken 8 wird jeweils die Varianz Var des Signals bestimmt und anschließend in den Blöcken 9 mit einem Mittelwertfilter gefiltert. Dieses Verfahren zur Bestimmung der Maßgrößen e1, e2, e3 ist vorteilhaft, da kein Frequenzspektrum ermittelt werden muss, und so der Auswertungsaufwand relativ gering ist.

Die Frequenzbreite jedes Bandpassfilters ist dabei beispielsgemäß derart zu wählen, dass in jedem Fall das Amplitudenmaximum (Resonanzfrequenz $f_{Eigeni}$) enthalten ist. Dies ist insbesondere bei einer unsicheren Bestimmung des relevanten Frequenzbereichs wichtig.

Gemäß einem dritten, nicht dargestellten Ausführungsbeispiel eines erfindungsgemäßen Verfahrens werden die Maßgrößen e1, e2, e3 anhand eines bestimmten Frequenzspektrums des Raddrehzahlsignals $\omega$ ermittelt. Bevorzugt wird das Frequenzspektrum durch eine diskrete Fourier-Transformation berechnet. Diese Bestimmung der Maßgrößen ist insbesondere dann vorteilhaft, wenn das erfindungsgemäße Verfahren mit einem anderen indirekten Reifendruckverlustverfahren kombiniert wird, das auf der Auswertung/Verschiebung einer aus einem Frequenzspektrum ermittelten Resonanzfrequenz basiert. In diesem Fall wird das Frequenzspektrum im Rahmen des anderen indirekten Verfahrens bereits ermittelt und muss nur noch entsprechend ausgewertet werden.

Beispielsgemäß wird zunächst ein ungefiltertes Frequenzspektrum aus dem Drehzahlsignal $\omega$ eines Rades bestimmt, z.B. durch Frequenzanalyse mittels Fourier-Transformation. Ein solches Spektrum wird z.B. im 1 Sekunden-Takt ermittelt (entspricht somit einer Frequenzauflösung von 1 Hz). Anschließend erfolgt z.B. eine Mittelung der Einzelspektren zu einem Gesamtspektrum.

Steht also das Spektrum des Raddrehzahlsignals $\omega$ zur Verfügung, so können die Größen e1, e2, e3 direkt aus dem Spektrum ermittelt werden. Dabei kann entweder die Amplitude (z.B. $G(f_{Eigen1})$) direkt an der ermittelten Resonanzfrequenz bestimmt werden oder es wird ein Mittelwert um die Resonanzfrequenz ermittelt (Mittelung von G(f) für Frequenzbereich $f_{unten} \leq f \leq f_{oben}$, dabei kann z.B. $f_{unten} = f_{Eigen1} - \Delta f_1/2$ und $f_{oben} = f_{Eigen1} + \Delta f_1/2$ mit vorgegebener Intervallbreite $\Delta f_1$). Alternativ kann auch der Energiegehalt des Spektrums in einem Frequenzbereich, d.h. das Integral über die Übertragungsfunktion G in einem Frequenzbereich (z.B. $f_{Eigen1} - \Delta f_1/2$ bis $f_{Eigen1} + \Delta f_1/2$) um die jeweilige Eigenfrequenz $\int_{f_{Eigen1} - \Delta f_1/2}^{f_{Eigen1} + \Delta f_1/2} G(f) \cdot df$ , herangezogen werden.

Wie oben bereits erwähnt, führen unterschiedliche Straßenanregungen zu unterschiedlichen spektralen Dichten in den einzelnen Frequenzbereichen des Frequenzspektrums, wodurch eine zuverlässige Druckverlusterkennung anhand der Maßgrößen e1, e2, e3 gestört werden kann. Um dies zu kompensieren, werden neben oder anstelle der Maßgrößen e1, e2, e3 selbst deren Quotienten (Verhältnis von Maßgrößen) betrachtet. Eine mögliche Wahl von Verhältnissen ist e1/e2, e1/e3 und e2/e3 (alternativ können auch andere Verhältnisse der Maßgrößen gebildet werden). Durch die Quotientenbildung werden Verschiebungen der spektralen Dichte durch z.B. Straßenanregungen kompensiert.

Bevorzugt wird die Druckverlusterkennungsgröße DVE aus einem Verhältnis von zwei Maßgrößen gebildet und mindestens eine Maßgröße selbst wird zusätzlich zur Steuerung des Reifendrucküberwachungsverfahrens und/oder zur Kompensation der Druckverlusterkennungsgröße DVE herangezogen.

Gemäß einem Ausführungsbeispiel wird das Reifendrucküberwachungsverfahren deaktiviert, wenn eine Maßgröße, z.B e3, größer als ein erster vorgegebener Schwellenwert oder kleiner als ein zweiter vorgegebener Schwellenwert wird.

Zusätzlich oder alternativ wird eine Maßgröße, z.B e1, zur Kompensation der Druckverlusterkennungsgröße DVE herangezogen (siehe auch Beschreibung unten).

Erhöhungen oder Verminderungen einzelner Bereiche im Frequenzspektrum werden z.B. durch eine (zeitliche) Filterung der Maßgrößen herausgemittelt.

Die Fahrzeuggeschwindigkeit v beeinflusst als Modellparameter und als Anregungskomponente die Maßgrößen e1, e2, e3. Deshalb wird gemäß einem Ausführungsbeispiel die Abhängigkeiten der Maßgrößen und/oder Der Druckverlusterkennungsgröße DVE von der Geschwindigkeit berücksichtigt. Hierzu kann eine Geschwindigkeitsabhängigkeit als funktionaler Zusammenhang vorgegeben sein und direkt explizit berücksichtigt werden (siehe Gleichung (2)) oder die Geschwindigkeitsabhängigkeit wird eingelernt und anschließend zur Kompensation herangezogen.

Gemäß einem Ausführungsbeispiel wird aus dem Verhältnis e2/e3 der beiden Maßgrößen e2 und e3 und der Fahrzeuggeschwindigkeit v eine Druckverlusterkennungsgröße DVE gemäß folgender Gleichung bestimmt:

$$\mathrm{DVE} = \mathrm{v}^{3/2} \cdot \frac{\mathrm{e}2}{\mathrm{e}3} \tag{2}$$

Diese Druckverlusterkennungsgröße DVE entspricht einem Geschwindigkeitskompensierten Verhältnis von Maßgrößen. Durch die Quotientenbildung e2/e3 wird eine weitgehende Streckenunabhängigkeit erreicht und der größte Teil der Geschwindigkeitsabhängigkeit der Druckverlusterkennungsgröße DVE wird explizit durch den funktionalen Zusammenhang $v^{3/2}$ berücksichtigt.

Alternativ zu der in Gleichung (2) beschriebenen Berücksichtigung der Fahrzeuggeschwindigkeit v durch einen vorgegebenen Zusammenhang kann die Abhängigkeit von der Fahrzeuggeschwindigkeit v auch durch ein Lernen der Druckverlusterkennungsgröße DVE (z.B. $\mathrm{DVE} = \dfrac{\mathrm{e}2}{\mathrm{e}3}$ nach Gleichung (1)) in Geschwindigkeitsintervallen berücksichtigt werden.

Weiterhin kann auch eine exaktere Geschwindigkeitsabhängigkeit, z.B. ausgehend von Gleichung (2) (oder siehe weiter unten), nachgelernt werden.

Gemäß einem anderen Ausführungsbeispiel wird anstelle des Quotienten e2/e3, der in den oben beschriebenen Ausführungsbeispielen verwendet wurde, der Quotient e2/e1 zur Bildung einer Druckverlusterkennungsgröße DVE herangezogen. Nichtlinearitäten, z.B. in dem Verhalten einzelner Komponenten der Radaufhängungen (siehe auch unten), führen zu einer anregungsabhängigen Beeinflussung der Maßgrößen. Deshalb werden vorteilhafterweise die Abhängigkeiten der Maßgrößen untereinander bzw. der Verhältnisse von Maßgrößen untereinander eingelernt und anschließend zu einer Kompensation herangezogen.

Gemäß einem weiteren Ausführungsbeispiel wird die Druckverlusterkennungsgröße DVE, z.B. gemäß Gleichung (1) oder (2), in Abhängigkeit des Energieverhältnisses e1/e3 eingelernt. Hierdurch werden evtl. noch verbleibende Streckenabhängigkeiten besser berücksichtigt. Hierzu wird die Druckverlusterkennungsgröße DVE in Werteintervallen von e1/e3 eingelernt und später verglichen.

Auch die Temperatur T beeinflusst z.B. über die Reifendämpfungen (siehe die Modellparameter weiter unten) die Maßgrößen e1, e2, e3. Deshalb wird vorteilhafterweise die Abhängigkeiten der Maßgrößen oder der Verhältnisse von Maßgrößen oder der Druckverlusterkennungsgröße DVE von der Temperatur eingelernt und anschließend zur Kompensation herangezogen. Die Temperatur wird beispielsweise durch Sensoren oder ein Temperaturmodell ermittelt.

Alternativ zu einer Kompensation kann die Temperatur beim Lernen, insbesondere zusammen mit den eingelernten Maßgrößen e1, e2, e3 oder der Druckverlusterkennungsgröße DVE, gespeichert werden und dann bei der Druckverlustüberwachung/Schadenserkennung mit der (aktuellen) Temperatur verglichen werden. Unterscheiden sich diese Temperaturen stark, so kann die Einlaufzeit der Filter erhöht werden oder das System verhindert eine Warnung.

In Fig. 3 ist ein Flussdiagramm eines vierten Ausführungsbeispiels eines erfindungsgemäßen Verfahrens schematisch dargestellt. Neben den ermittelten Maßgrößen e1, e2, e3 und den daraus gebildeten Verhältnissen e1/e2, e2/e3, e1/e3 gehen auch die Fahrzeuggeschwindigkeit v und die Temperatur T als Eingangsgrößen in die Druckverlust- und/oder Schadenserkennung ein. Bei einer Initialisierung oder Neukalibrierung des Überwachungssystems, beispielsgemäß nach Betätigung eines Reset-Schalters durch den Fahrer in Block 13 (hierbei sollte der Reifendruck/die Reifendrücke seinem/ihren Sollwert(en) entsprechen), werden die Abhängigkeiten der Maßgrößen e1, e2, e3 und/oder deren Verhältnisse, z.B. der Druckverlusterkennungsgröße DVE, untereinander und/oder von der Fahrzeuggeschwindigkeit v und/oder der Temperatur T in Block 10 eingelernt. Die Zusammenhänge zwischen den Größen können durch ein lineares oder nichtlineares parametrisches Modell der Eingangsgrößen oder durch ein Black-Box-System, wie ein Neuronales Netz, abgebildet werden. Auch können Abhängigkeiten durch Mittelwerte in bestimmten Intervallen von Eingangsgrößen gelernt werden. Nach der Lernphase liegt mindestens ein Sollwert $DVE_{soll}$ der Druckverlusterkennungsgröße DVE für die Druckverlustüberwachung vor. Es können auch mehrere Sollwerte der Druckverlusterkennungsgröße DVE vorliegen, wenn die Druckverlusterkennungsgröße DVE z.B. in Intervallen von Werten einer Größe (z.B. Geschwindigkeit v, Temperatur T und/oder Verhältnis e1/e3) eingelernt wird. Die Druckverlusterkennungsgröße DVE hängt dabei im Wesentlichen nur noch von dem Reifendruck ab. Zur Druckverlustüberwachung werden in Block 11 die aktuellen Eingangsgrößen zusammen mit den eingelernten Abhängigkeiten zur Ermittlungen eines aktuellen, kompensierten Wertes $DVE_{akt}$ der Druckverlusterkennungsgröße DVE herangezogen. Eine Druckverlustbewarnung findet in Block 12 statt, wenn die aktuelle Druckverlusterkennungsgröße $DVE_{akt}$ den entsprechenden eingelernten Wert $DVE_{soll}$ (z.B. bei gleichem/ähnlichem Wert des Verhältnisses e1/e3) um einen Schwellwert S übersteigt:

$$|DVE_{akt} - DVE_{soll}| > S \qquad\qquad (3)$$

Der Schwellwert S kann fest vorgegeben sein oder aus Fahrzeuginformationen bestimmt worden sein.

Beispielsgemäß wird die Lernphase in Block 10 durch eine Betätigung eines Reset-Schalters durch den Fahrer gestartet, es sind jedoch auch andere Startbedingungen für ein Einlernen denkbar.

Im Folgenden wird ein Beispiel eines Verfahrens zur Kompensation einer Größe, z.B. der Druckverlusterkennungsgröße DVE (z.B. gemäß Gleichung (1) oder (2)), bezüglich einer anderen Größe Y, z.B. der Temperatur T oder dem Verhältnis e1/e3, beschrieben. Hierbei wird anhand von bestimmten (X, Y)-Wertepaaren ein funktionaler Zusammenhang g (z.B. ein linearer Zusammenhang), speziell die Parameter des angenommenen funktionalen Zusammenhangs g, eingelernt, der die Veränderung der Größe X von einem Sollwert X0 und dem Störeinfluss Y und evtl. weiteren Größen beschreibt:

$$X = g(X0, Y, \ldots)$$

Beispielsgemäß wird aufgrund der einfachen Bestimmbarkeit durch Regression ein linearer Zusammenhang angesetzt:

$$X = X0 + a * Y ,$$

wobei die Parameter X0 und a der Geradengleichung, z.B. durch Anfitten der (X, Y)-Wertepaare, in der Lernphase 10 bestimmt werden. Der Parameter X0 entspricht dann dem eingelernten Vergleichswert (z.B. $DVE_{soll}$).

Zur Kompensation (z.B. in der Vergleichsphase 11) wird die aktuell ermittelte Größe X durch die Umkehrfunktion $g^{-1}$ kompensiert. Hierzu wird beispielgemäß die aktuell ermittelte Größe $X_{aktuell}$ gemäß $X_{komp} = X_{aktuell} - a*Y_{aktuell}$ anhand der aktuellen Größe $Y_{aktuell}$ und dem eingelernten Parameter a kompensiert.

Gemäß einem weiteren Ausführungsbeispiel des erfindungsgemäßen Verfahrens ist eine sogenannte Grundkompensation der Druckverlusterkennungsgröße DVE vorgegeben, welche z.B. in einem Steuergerät in Form eines vorgegebenen funktionalen Zusammenhangs von Druckverlusterkennungsgröße DVE und Einflussgrößen (z.B. Temperatur T, Geschwindigkeit v, ein oder mehrerer Maßgrößen e1, e2, e3) und entsprechenden vorgegebenen Parametern des funktionalen Zusammenhangs abgespeichert ist. Diese Grundkompensation wird dann in der Einlernphase optimiert/verbessert.

Beispielsgemäß wird die Grundkompensation (vorgegebene Parameter) nach einem Reset eingelesen. In der anschließenden Einlernphase werden durch Anfitten des funktionalen Zusammenhangs an ermittelte Werte-Kombinationen (z.B. (DVE, T, v, e1)-Werte-Kombination) optimierte Werte für die Parameter des funktionalen Zusammenhang eingelernt. Diese optimierten Parameter werden dann zur Kompensation der Druckverlusterkennungsgröße DVE in der Vergleichsphase herangezogen.

Gemäß einem Beispiel wird ein funktionaler Zusammenhang

$$DVE_{komp} = DVE_{aktuell} + a*T + b*v + c*v^2 + d*e1$$

angesetzt, wobei die Einflussgrößen Temperatur T, Geschwindigkeit v und Maßgröße e1 berücksichtigt werden, und "Startwerte" für die Parameter a, b, c und d vorgegeben sind. Es ist jedoch auch ein anderer funktionaler Zusammenhang und/oder die Berücksichtigung mehr oder weniger Einflussgrößen denkbar. In der Einlernphase werden dann verbesserte Werte für die Parameter a, b, c und d angepasst.

Anstelle der in den Beispielen genannten Verhältnisse ei/ej kann jeweils auch der Kehrwert ej/ei betrachtet werden.

Durch das erfindungsgemäße Verfahren ist eine radindividuelle Reifendruckverlusterkennung möglich.

Das beschriebene Verfahren der Auswertung von Maßgröße ist auch zur Schadenserkennung der Radaufhängung geeignet. Bei Veränderungen der Komponenten der Radaufhängung verändern sich ebenso die Energieverhältnisse, was anhand der Maßgrößen e1, e2, e3 und/oder ihrer Verhältnisse erkannt werden kann.

Optional wird zur Druckverlusterkennung zusätzlich eine Auswertung der Lage/Position einer oder mehrerer Resonanzen, d.h. der Werte der Resonanzfrequenzen $f_{Eigen1}$, $f_{Eigen2}$, $f_{Eigen3}$, durchgeführt. Hierzu werden beispielsgemäß die Lagen der Resonanzfrequenz der Radvertikal- und Radtorsionalfrequenz zusammen bewertet. Ein Luftdruckverlust wird erkannt oder eine Druckverlusterkennung eines anderen Druckverlusterkennungsverfahrens gestützt, wenn beide Resonanzfrequenzen kleiner werden als ihre jeweiligen eingelernten Sollwerte.

Gemäß einem fünften Ausführungsbeispiel wird ein erfindungsgemäßes Verfahren basierend auf einer Druckverlusterkennungsgröße DVE aus zwei Maßgrößen e1, e2, e3 (z.B. DVE nach Gleichung (1) oder (2)) mit einem Druckverlusterkennungsverfahren basierend auf der Verschiebung mindestens einer Resonanzfrequenz (z.B. eine Druckverlusterkennungsgröße DVE entspricht einer Resonanzfrequenz) kombiniert. Dabei wird in Abhängigkeit von der Fahrzeuggeschwindigkeit v und/oder eines Wertes einer Maßgrößen (oder eines Verhältnisses zweier Maßgrößen) die Druckverlusterkennung schwerpunktmäßig anhand der Druckverlusterkennungsgröße DVE des einen oder des anderen Verfahrens durchgeführt. Da die Frequenzverschiebung insbesondere bei kleineren Geschwindigkeiten v und das erfindungsgemäße Verfahren bei höheren Geschwindigkeiten v zuverlässige Ergebnisse liefert, wird z.B. eine entsprechende Gewichtung der Einzelverfahren und ihrer Ergebnisse in Abhängigkeit der Geschwindigkeiten v vorgenommen und zu einem Gesamtergebnis kombiniert.

Im Folgenden werden beispielhafte Modelle zur Beschreibung und Erläuterung der Torsionsschwingung und der Vertikaldynamik des Reifens getrennt voneinander vorgestellt. Eine getrennte Betrachtung ist möglich, da die beiden Systeme in unterschiedlichen Frequenzbereichen arbeiten.

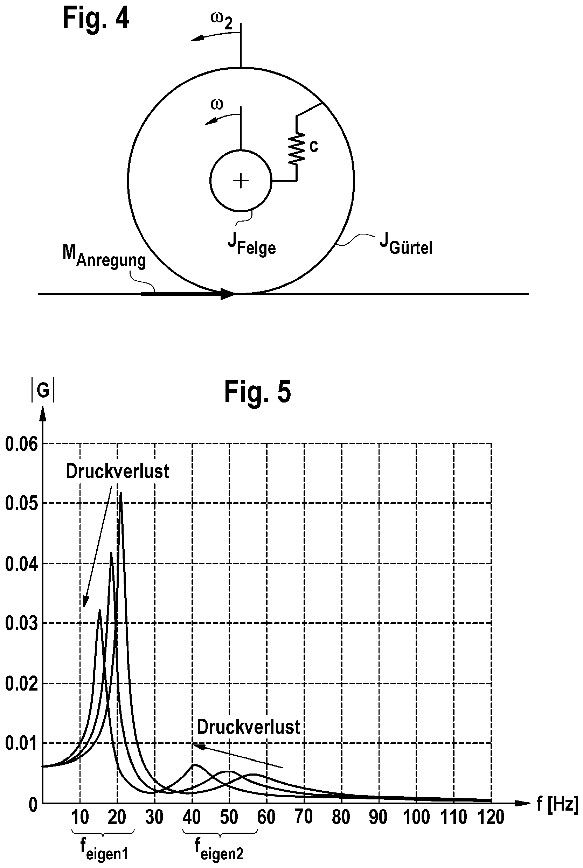

Im Folgenden wird zuerst ein die Torsionsschwingung beschreibendes Modell erläutert, welches zu einer beispielhaften Bewegungsgleichung führt. In Fig. 4 ist ein Modell des Rades schematisch dargestellt. Das Rad wird durch das Trägheitsmoment der Felge $J_{Felge}$ und das Trägheitsmoment des Reifengürtels $J_{Gürtel}$ beschrieben. Die torsionale Federkonstante zwischen Gürtel und Felge wird mit c bezeichnet. Die Drehgeschwindigkeit des Gürtels, welche der Drehgeschwindigkeit des Radumfangs entspricht, wird durch die Winkelgeschwindigkeit $\omega_2$ und die Drehgeschwindigkeit der Felge, welche z.B. mit einem Raddrehzahlsensor gemessen wird, wird durch die Winkelgeschwindigkeit $\omega$ beschrieben. Der Radius des Reifens wird mit R bezeichnet.

Das am Gürtel angreifende Anregungsmoment $M_{Anregung}$ wird modellgemäß durch die folgende Schlupfgleichung beschrieben:

$$M_{Anregung} = \alpha \cdot R \cdot \frac{v - \omega_2 \cdot R}{v}$$

Dabei repräsentiert $\alpha$ den Anstieg des Raddrehmoments in Abhängigkeit der Änderung des Radschlupfes.

Nach Aufstellen der Differentialgleichungen, Einsetzen der Schlupfgleichung und Überführung in den Frequenzbereich (Laplace-Transformation mit der Laplace-Variable s) ergibt sich die folgende Übertragungsfunktion G zwischen einem am Gürtel angreifenden Anregungsmoment $M_{Anregung}$ und einer von einem Raddrehzahlsensor messbaren Winkelgeschwindigkeit $\omega$ (Gleichung (4)):

$$G = \frac{\omega}{M_{Anregung}} = \frac{1}{\frac{J_{Felge} \cdot J_{Gürtel}}{c} \cdot s^3 + \frac{J_{Felge} \cdot R^2}{c} \frac{\alpha}{v} \cdot s^2 + (J_{Felge} + J_{Gürtel}) \cdot s + \frac{R^2 \alpha}{v}}$$

Als konstant für ein Fahrzeug ohne Reifenwechsel und ohne Reifendruckveränderung können das Trägheitsmoment der Felge $J_{Felge}$, des Gürtels $J_{Gürtel}$, der Reifenradius R und die Federkonstante c angenommen werden. Variabel sind während der Fahrt die Geschwindigkeit v und die Steigung der Drehmoment-Schlupf-Beziehung $\alpha$.

Die Werte von $s^3$, $s^2$ und s ergeben sich aus den zeitlichen Ableitungen höherer Ordnung der Winkelgeschwindigkeit $\omega$, und lassen sich somit aus der gemessenen Winkelgeschwindigkeit $\omega$ bestimmen.

Der Betrag der Übertragungsfunktion |G| des Systems verändert sich als Funktion der Frequenz f (der torsionalen Schwingung) mit variierendem Quotienten a/v. Abhängig von dem Quotienten a/v prägt sich entweder eine Resonanzfrequenz $f_{Eigen2}$ im Bereich von etwa 45 Hz aus oder aber eine Resonanzfrequenz $f_{Eigen3}$ im Bereich von etwa 75 Hz.

Im Grenzfall a/v gegen Null (d.h. hohe Geschwindigkeiten v und/oder glatter Untergrund) ergibt sich folgende Eigenfrequenz des Systems (hohe Eigenfrequenz $f_{Eigen3}$) :

$$f_{Eigen3} = \frac{\sqrt{\frac{c\,(J_{Felge} + J_{Gürtel})}{J_{Felge} \cdot J_{Gürtel}}}}{2\pi} \qquad (5)$$

Für den anderen Grenzfall a/v gegen Unendlich ergibt sich die Eigenfrequenz des Systems zu (niedrigere Eigenfrequenz $f_{Eigen2}$) :

$$f_{Eigen2} = \frac{\sqrt{\dfrac{c}{J_{Felge}}}}{2\pi} \qquad (6)$$

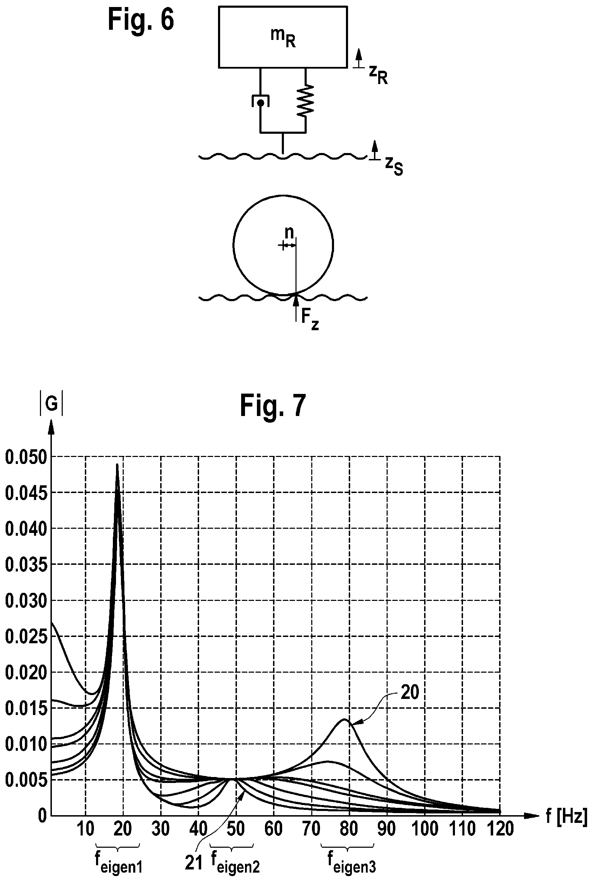

Für kleine a/v prägt sich die hohe Eigenfrequenz $f_{Eigen3}$ (ca. 75-80 Hz) aus, bei weiter steigendem a/v kommt das System in einen Übergangsbereich, um dann bei noch weiter steigendem a/v die untere Resonanzfrequenz $f_{Eigen2}$ auszuprägen (siehe auch Fig. 7 und zugehörige Beschreibung).

Für die Betrachtung der Resonanzamplitude für die niedrigere Eigenfrequenz ($f_{Eigen2}$) wird Gleichung (4) für den Grenzfall $\alpha/v$ gegen Unendlich vereinfacht. Dieser Grenzfall beschreibt die übliche Fahrsituation bei hohem Reibwert und moderaten Geschwindigkeiten v. Es ergibt sich für die Übertragungsfunktion G:

$$\frac{\omega}{M_{Anregung}} = \frac{c \cdot v}{J_{Felge} \cdot R^2} \cdot \frac{1}{s^2 + \dfrac{(J_{Felge} + J_{Gürtel}) \cdot c \cdot v}{J_{Felge} \cdot R^2 \cdot \alpha} \cdot s + \dfrac{c}{J_{Felge}}} \qquad (7)$$

Die Resonanzamplitude $A^2_{max}$ ergibt sich mit (k und d entsprechend Gleichung (7) gewählt):

$$\frac{\omega}{M_{Anregung}} = k \cdot \frac{1}{J_{Felge} \cdot s^2 + d \cdot c \cdot s + c} \qquad (8)$$

zu

$$A^2_{max} = \frac{2 \cdot J_{Felge}}{c^{3/2} \cdot d \cdot \sqrt{4m - d^2 \cdot c}} \qquad (9)$$

Bei sinkendem Reifendruck (Druckverlust) reduziert sich die Federkonstante c und somit wird die Resonanzamplitude $A^2_{max}$ größer. Dies ist in Fig. 5 im Frequenzbereich von $f_{Eigen2}$ (ca. 40 - 60 Hz) schematisch dargestellt.

Im Folgenden wird anhand von Fig. 6 ein Modell zur Beschreibung und Erläuterung der Vertikaldynamik des Reifens erläutert, welches zu beispielsgemäßen Bewegungsgleichungen der Vertikalschwingung führt. Im Frequenzspektrum des Raddrehzahlsignals ist eine weitere Resonanzfrequenz $f_{Eigen1}$ (ca. 15 - 20 Hz) zu beobachten, welche durch die Vertikaldynamik des Reifens erklärt werden kann. Für den betrachteten Frequenzbereich der Raddynamik ist es ausreichend, die Radmasse $m_R$ und die Feder-/Dämpferwirkung des Reifens $c_R$ / $d_R$ zu betrachten. Im verwendeten Modell lautet die Bewegungsgleichung des Rades (momentan Auslenkung $z_R$) bei Straßenunebenheiten $z_S$, wobei am Reifen die Kraft $F_z$ angreift:

$$m_R \ddot{z}_R = c_R (z_S - z_R) + d_R (\dot{z}_S - \dot{z}_R) \qquad (10)$$

$$F_z = c_R (z_S - z_R) \qquad (11)$$

Gemäß des physikalischen Gesetzes "Kraft $F_z$ mal Hebelarm n" führen die auf den Reifen wirkenden Kräfte, die über das Abrollverhalten und die Geometrie (z.B. der Radaufhängung) von der Strecke auf den Reifen wirken, zur Aufprägung eines Momentes ($J_R$: Radträgheitsmoment):

$$J_R \cdot \dot{\omega} = F_z \cdot n$$

Es ergibt sich

$$\omega = \frac{m_R \cdot c_R \cdot n \cdot J_R^{-1} \cdot s}{m_R s^2 + d_R s + c_R} \cdot z_s \qquad (12)$$

und die Resonanzamplitude $A^1_{max}$:

$$A^1_{max} = \frac{m_R \cdot c_R \cdot n \cdot J_R^{-1}}{d_R} \qquad (13)$$

Bei sinkendem Luftdruck reduziert sich $c_R$ und somit wird die Resonanzamplitude $A^1_{max}$ kleiner.

Anschaulich kann man sagen, dass sich die Schwingung des Reifens in Vertikalrichtung (hervorgerufen z.B. durch die Straßenanregung) aufgrund des Hebelarms (Nachlaufs n) auf die Raddrehzahl $\omega$ aufprägt. Daher ist die Vertikalschwingung im Raddrehzahlsignal $\omega$, genauer im Frequenzspektrum der Raddrehzahl, beobachtbar.

In Fig. 5 sind beispielsgemäße Frequenzspektren (Betrag der Übertragungsfunktion G als Funktion der Frequenz f) eines Raddrehzahlsignals aufgetragen für verschiedene Reifendrucke aufgetragen (eine Druckabnahme wird durch die Pfeile angedeutet). Fig. 5 verdeutlicht nochmals den oben beschriebenen Zusammenhang, dass bei einem Druckverlust die Resonanzamplitude der (vertikalen) Radschwingung bei $f_{Eigen1}$ kleiner wird (und damit die Maßgröße e1), während die Resonanzamplitude der Torsionsschwingung bei $f_{Eigen2}$ größer wird (und damit die Maßgröße e2).

Ein Störeffekt bei einer Auswertung des Frequenzspektrums ist die Abhängigkeit von der Straßenanregung. Die Straßenanregung kann als weiteres Frequenzspektrum verstanden werden, dass sich dem Systemverhalten überlagert. Daraus folgenden zwei Einflüsse auf die Resonanzamplituden $A^1_{max}$, $A^2_{max}$, $A^3_{max}$ der drei Eigenfrequenzen:

- Das Gesamtniveau der Resonanzamplituden variiert mit der Art der Strasse.
- Durch Inhomogenitäten einer Straße kann es zu Erhöhungen oder Verminderungen einzelner Bereiche im Frequenzspektrum kommen.

Dies führt zu einer Abhängigkeit der Resonanzamplituden von der Anregung.

Ein weiterer Störeffekt ist die Abhängigkeit von Nichtlinearitäten. Die einzelnen Komponenten der Radaufhängung, wie Reifen, Dämpfer, Feder oder Gummilager haben typischer Weise ein nichtlineares Verhalten. Das bedeutet, dass sie ein arbeitspunktabhängiges Systemverhalten haben. Insbesondere durch unterschiedliche Straßenanregungen können somit einzelne Komponenten im Betrieb verschiedene Parameter annehmen. Dies führt zu einer weiteren Abhängigkeit der Resonanzamplituden von der Anregung.

Ein weiterer Störeffekt ist die Abhängigkeit von der Temperatur. Die Eigenschaften einzelnen Komponenten der Radaufhängung sind stark von der Temperatur abhängig. Hierzu gehören insbesondere die Dämpfung von Rad und Stossdämpfer, die direkt in die Gleichungen der Resonanzamplituden eingehen.

Außerdem ist die Abhängigkeit vom (Straßen)Reibwert, der (Fahrzeug)Beladung und der (Fahrzeug)Geschwindigkeit zu berücksichtigen. Veränderungen von Reibwert, Beladung und Geschwindigkeit beeinflussen direkt den Quotienten a/v aus Gleichung (4). Somit wird, wie oben bereits angesprochen, die Ausprägung der Resonanzfrequenzen, insbesondere bei $f_{Eigen2}$ und $f_{Eigen3}$, verändert.

Beispielsgemäße Änderungen der Resonanzamplituden $A^1_{max}$, $A^2_{max}$, $A^3_{max}$ der drei betrachteten Eigenfrequenzen $f_{Eigen1}$, $f_{Eigen2}$, $f_{Eigen3}$ bei einer Änderung von a/v sind in Fig. 7 dargestellt. Die oberste Kurve 20 entspricht einem kleinen Wert von $\alpha/v$, die unterste Kurve 21 entspricht einem großen Wert von a/v. Wie zu sehen ist, wird die Resonanzamplitude $A^1_{max}$ der vertikalen Schwingungen bei ca. 18Hz ($f_{Eigen1}$) nur wenig und die Resonanzamplitude $A^2_{max}$ der torsionalen Schwingungen bei 50Hz ($f_{Eigen2}$) nicht oder kaum beeinflusst. Jedoch tritt in Abhängigkeit von a/v die dritte Resonanz bei ca. 80 Hz ($f_{Eigen3}$) mit mehr oder weniger ausgeprägter Resonanzamplitude $A^3_{max}$ auf.

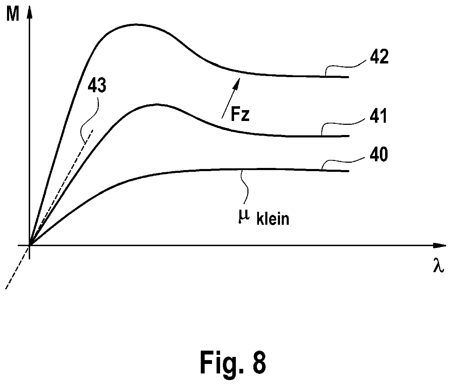

Die Drehmoment-Schlupf-Kurve eines Reifens ist abhängig von dem Reibwert $\mu$ und der Radlast Fz. In Fig. 8 sind schematisch beispielhafte Kurven 40, 41, 42 des Drehmomentes M als Funktion des Schlupfes $\lambda$ bei variierendem Reibwert $\mu$ und Radlast Fz gezeigt. Die Größe a repräsentiert den Anstieg des Drehmoments M in Abhängigkeit der Änderung des Schlupfes $\lambda$ ($\lambda=(v-(\omega_2 R)/v)$, d.h. die Größe $\alpha$ kann als die Steigung einer Drehmoment-Schlupf-Kurve an einem (Arbeits)Punkt betrachtet werden (die gestrichelte Linie 43 deutet eine Steigung $\alpha$ für Kurve 41 an).

Alle Größen, die $\alpha$ verändern, haben einen Einfluss auf die Übertragungsfunktion G und die sich ausprägenden Resonanzfrequenzen.

Ein kleiner Reibwert $\mu$ führt in der Regel zu einem kleineren $\alpha$ (Kurve 40 in Fig. 8).

Je nachdem in welchem Arbeitspunkt (Antriebsmoment/Bremsmoment) man sich auf der Drehmomenten-Schlupf-Kurve befindet, verändert sich a. Für höhere Schlupfwerte $\lambda$ bzw. Drehmomente M sinkt $\alpha$ in der Regel.

Eine erhöhte Radlast $F_Z$ (durch einen Pfeil in Fig. 8 angedeutet), z.B. durch Beladung, führt zu einem steigenden $\alpha$.

Die Fahrzeuggeschwindigkeit v geht direkt reziprok in $\alpha/v$ ein.

Es ergibt sich, dass durch die Überwachung von Maßgrößen, die auf der Resonanzamplitude basieren (z.B. spektrale Energiedichte oder Energiegehalt) ein Reifendruckverlust erkannt werden kann. Bevorzugt sollten außerdem die verschiedenen Einflüsse kompensiert werden.

## Patentansprüche

1. Verfahren zur indirekten Reifendrucküberwachung oder zur Erkennung eines Schadens einer Radaufhängung, in welchem anhand einer Analyse eines Schwingungsverhaltens eines Rades eines Kraftfahrzeugs eine Druckverlusterkennungsgröße (DVE) bestimmt wird und durch Vergleich einer aktuell bestimmten Druckverlusterkennungsgröße ($DVE_{akt}$) mit einer eingelernten Druckverlusterkennungsgröße ($DVE_{soll}$) ein Druckverlust an dem Reifen des Rades oder ein Schaden der Radaufhängung erkannt wird, wobei aus einem Raddrehzahlsignal ($\omega$) des Rades für mindestens drei verschiedene Frequenzen und/oder Frequenzbereiche Maßgrößen (e1, e2, e3) bestimmt werden, welche jeweils ein Maß für die Ausprägung einer Frequenz ($f_{Eigen1}$, $f_{Eigen2}$, $f_{Eigen3}$) oder eines Frequenzbereiches ($f_{unten}$, $f_{oben}$, $\Delta f_{Eigeni}$) in dem Schwingungsverhalten des Rades darstellen, und dass die drei Maßgrößen (e1, e2, e3), insbesondere ein Verhältnis zweier Maßgrößen (e2/e3), zur Druckverlust- und/oder Schadenserkennung herangezogen werden, **dadurch gekennzeichnet, dass** die Druckverlusterkennungsgröße (DVE) aus einem Verhältnis zweier Maßgrößen (e2/e3) gebildet wird.

2. Verfahren nach Anspruch 1, **dadurch gekennzeichnet, dass** die Druckverlusterkennungsgröße (DVE) in Abhängigkeit von der dritten Maßgröße (e1), insbesondere von einem Verhältnis zweier Maßgrößen (e1/e3), welches die dritte Maßgröße (e1) enthält, betrachtet wird, insbesondere eingelernt und ausgewertet wird.

3. Verfahren nach mindestens einem der Ansprüche 1 bis 2, **dadurch gekennzeichnet, dass** die Druckverlusterkennungsgröße (DVE) aus einem Verhältnis der beiden Maßgrößen (e2/e3) und einer Fahrzeuggeschwindigkeit (v) berechnet wird.

4. Verfahren nach mindestens einem der Ansprüche 1 bis 3, **dadurch gekennzeichnet, dass** mindestens zwei der Frequenzen ($f_{Eigen1}$, $f_{Eigen2}$) und/oder Frequenzbereiche ($f_{Eigen1} \pm \Delta f_{Eigen1}/2$, $f_{Eigen2} \pm \Delta f_{Eigen2}/2$) derart gewählt sind, dass die entsprechenden Maßgrößen (e1, e2) bezüglich ihrer Werte eine unterschiedliche Änderung oder bezüglich ihrer Änderung ein gegenläufiges Verhalten bei einem Reifendruckverlust und/oder Radaufhängungsschaden zeigen.

5. Verfahren nach mindestens einem der Ansprüche 1 bis 4, **dadurch gekennzeichnet, dass** eine Maßgröße (e1, e2, e3), insbesondere jede Maßgröße, durch Filterung des Raddrehzahlsignals ($\omega$) mit einem Bandpassfilter (BP) bestimmt wird.

6. Verfahren nach Anspruch 5, **dadurch gekennzeichnet, dass** die Maßgröße (e1, e2, e3) sich aus der Varianz (8) des gefilterten Signals, insbesondere nach Mittelwertfilterung (9), ergibt.

7. Verfahren nach mindestens einem der Ansprüche 1 bis 4, **dadurch gekennzeichnet, dass**

   - eine Maßgröße (e1, e2, e3), insbesondere jede Maßgröße, ein Amplitudenwert (G) eines Frequenzspektrums des Raddrehzahlsignals ($\omega$) bei einer vorgegebenen oder bestimmten Frequenz ($f_{Eigen1}$, $f_{Eigen2}$, $f_{Eigen3}$) ist, oder
   - eine Maßgröße (e1, e2, e3), insbesondere jede Maßgröße, durch Integration oder Mittelung der Amplitudenwerte (G) eines Frequenzspektrums des Raddrehzahlsignals ($\omega_1$) in einem vorgegebenen oder bestimmten Frequenzbereich ($f_{Eigeni} \pm \Delta f_{Eigeni}/2$) bestimmt wird.

8. Verfahren nach mindestens einem der vorhergehenden Ansprüche, **dadurch gekennzeichnet, dass** die betrachteten Frequenzen und/oder Frequenzbereiche Resonanzfrequenzen der Radschwingung und/oder Frequenzbereiche um Resonanzfrequenzen der Radschwingung sind, wobei eine Resonanzfrequenz, insbesondere alle Resonanzfrequenzen,

- vorgegeben ist/sind, oder
- aus einem ermittelten Frequenzspektrum des Raddrehzahlsignals ($\omega$) bestimmt wird/werden, und/oder
- aus Modellparametern mindestens eines Modells oder mindestens einer modellbasierten Gleichung ermittelt wird/werden, wobei die Modellparameter durch Parameterschätzung unter Auswertung des Raddrehzahlsignals ($\omega$) bestimmt werden.

9. Verfahren nach mindestens einem der vorhergehenden Ansprüche, **dadurch gekennzeichnet, dass** mindestens eine Abhängigkeit zwischen

- einer Maßgröße (e1, e2, e3) und einer anderen Maßgröße (e1, e2, e3),
- einem Verhältnis von Maßgrößen (e2/e3), insbesondere der Druckverlusterkennungsgröße (DVE), und einem anderen Verhältnis von Maßgrößen (e1/e3),
- einer Maßgröße (e1, e2, e3) und einer Fahrzeuggeschwindigkeit (v),
- einem Verhältnis von Maßgrößen (e2/e3), insbesondere der Druckverlusterkennungsgröße (DVE), und einer Fahrzeuggeschwindigkeit (v),
- einer Maßgröße (e1, e2, e3) und einer Temperatur (T), und
- einem Verhältnis von Maßgrößen (e2/e3), insbesondere der Druckverlusterkennungsgröße (DVE), und einer Temperatur (T)

eingelernt und berücksichtigt wird.

10. Verfahren nach Anspruch 9, **dadurch gekennzeichnet, dass** die Abhängigkeit in Form eines funktionalen Zusammenhangs (g) zwischen der einen (X) und der anderen Größe (Y) vorgegeben ist oder bestimmt wird, oder dass die Abhängigkeit durch Einlernen und Vergleichen der einen Größe in Werte-Intervallen der anderen Größe berücksichtigt wird.

11. Verfahren nach Anspruch 9 oder 10, **dadurch gekennzeichnet, dass** die mindestens eine Abhängigkeit, insbesondere alle Abhängigkeiten, zur Bestimmung mindestens einer kompensierten Maßgröße (e1, e2, e3) oder einer kompensierten Druckverlusterkennungsgröße (DVE) herangezogen wird/werden.

12. Verfahren nach mindestens einem der vorhergehenden Ansprüche, **dadurch gekennzeichnet, dass** dieses mit einem anderen Verfahren zur indirekten Reifendrucküberwachung kombiniert wird, insbesondere mit einem Verfahren dessen Druckverlusterkennungsgröße (DVE) eine Resonanzfrequenz (f) ist.

13. Verfahren nach Anspruch 12, **dadurch gekennzeichnet, dass** in Abhängigkeit von der Fahrzeuggeschwindigkeit (v) und/oder den Werten der Maßgrößen (e1, e2, e3), insbesondere dem Wert eines Verhältnisses der Maßgrößen, die Druckverlusterkennung anhand des einen oder des anderen Verfahren zur indirekten Reifendrucküberwachung durchgeführt wird.

14. Reifendrucküberwachungssystem, in welchem die Raddrehzahl ($\omega$) mindestens eines Rades oder eine Größe, welche mit der Raddrehzahl ($\omega$) des Rades zusammenhängt, ermittelt und zur Erkennung eines Reifendruckverlustes ausgewertet wird, **dadurch gekennzeichnet, dass** dieses ein Auswertemittel umfasst, in welchem ein Verfahren gemäß mindestens einem der Ansprüche 1 bis 13 durchgeführt wird.

**Claims**

1. Method for indirectly monitoring tyre pressure or for detecting damage to a wheel suspension, in which a pressure loss detection variable (DVE) is determined on the basis of an analysis of an oscillation behaviour of a wheel of a motor vehicle, and a pressure loss at the tyre of the wheel or damage to the wheel suspension is detected by comparing a currently determined pressure loss detection variable ($DVE_{akt}$) with a learnt pressure loss detection variable ($DVE_{soll}$), wherein dimensional variables (e1, e2, e3) are determined for at least three different frequencies and/or frequency ranges from a wheel rotational speed signal ($\omega$) of the wheel, which dimensional variables (e1, e2, e3) each constitute a dimension for the manifestation of a frequency ($f_{Eigen1}$, $f_{Eigen2}$, $f_{Eigen3}$) or of a frequency range ($f_{unten}$, $f_{oben}$, $\Delta f_{Eigeni}$) in the oscillation behaviour of the wheel, and in that the three dimensional variables (e1, e2, e3), in particular a ratio between two dimensional variables (e2/e3), are used to detect pressure loss and/or damage, **characterized in that** the pressure loss detection variable (DVE) is formed from a ratio between two dimensional variables (e2/e3).

2. Method according to Claim 1, **characterized in that** the pressure loss detection variable (DVE) is considered, in particular learnt and evaluated, as a function of the third dimensional variable (e1), in particular of a ratio between two dimensional variables (e1/e3) which contains the third dimensional variable (e1).

3. Method according to at least one of Claims 1 to 2, **characterized in that** the pressure loss detection variable (DVE) is calculated from a ratio between the two dimensional variables (e2/e3) and a vehicle velocity (v).

4. Method according to at least one of Claims 1 to 3, **characterized in that** at least two of the frequencies ($f_{Eigen1}$, $f_{Eigen2}$) and/or frequency ranges ($f_{Eigen1}+\Delta f_{Eigen1}/2$, $f_{Eigen2}\pm\Delta f_{Eigen2}/2$) are selected in such a way that the corresponding dimensional variables (e1, e2) exhibit a different change with respect to their values or an opposing behaviour with respect to their change when there is a loss of tyre pressure and/or damage to the wheel suspension.

5. Method according to at least one of Claims 1 to 4, **characterized in that** a dimensional variable (e1, e2, e3), in particular any dimensional variable, is determined by filtering the wheel rotational speed signal ($\omega$) with a bandpass filter (BP).

6. Method according to Claim 5, **characterized in that** the dimensional variable (e1, e2, e3) results from the variance (8) of the filtered signal, in particular after mean value filtering (9).

7. Method according to at least one of Claims 1 to 4, **characterized in that**

   - one dimensional variable (e1, e2, e3), in particular every dimensional variable, is an amplitude value (G) of a frequency spectrum of the wheel rotational speed signal ($\omega$) at a predefined or determined frequency ($f_{Eigen1}$, $f_{Eigen2}$, $f_{Eigen3}$), or
   - one dimensional variable (e1, e2, e3), in particular every dimensional variable, is determined by integrating or averaging the amplitude values (G) of a frequency spectrum of the wheel rotational speed signal ($\omega_1$) in a predefined or determined frequency range ($f_{Eigeni}\pm\Delta f_{Eigeni}/2$).

8. Method according to at least one of the preceding claims, **characterized in that** the considered frequencies and/or frequency ranges are resonance frequencies of the oscillation of the wheel and/or frequency ranges about resonance frequencies of the oscillation of the wheel, wherein a resonance frequency, in particular all the resonance frequencies,

   - is/are predefined, or
   - is/are determined from an acquired frequency spectrum of the wheel rotational speed signal ($\omega$), and/or
   - is/are acquired from model parameters of at least one model or at least one model-based equation, wherein the model parameters are determined by parameter estimation by evaluating the wheel rotational speed signal ($\omega$).

9. Method according to at least one of the preceding claims, **characterized in that** at least one dependence between

   - one dimensional variable (e1, e2, e3) and another dimensional variable (e1, e2, e3),
   - a ratio of dimensional variables (e2/e3), in particular of the pressure loss detection variable (DVE), and another ratio of dimensional variables (e1/e3),
   - one dimensional variable (e1, e2, e3) and a vehicle velocity (v),
   - a ratio of dimensional variables (e2/e3), in particular of the pressure loss detection variable (DVE), and a vehicle velocity (v),
   - a dimensional variable (e1, e2, e3) and a temperature (T), and
   - a ratio of dimensional variables (e2/e3), in particular of the pressure loss detection variable (DVE), and a temperature (T)

   is learnt and taken into account.

10. Method according to Claim 9, **characterized in that** the dependence is predefined or determined in the form of a functional relationship (g) between the one variable (X) and the other variable (Y), or **in that** the dependence is taken into account by learning and comparing the one variable in value intervals of the other variable.

11. Method according to Claim 9 or 10, **characterized in that** the at least one dependence, in particular all the dependences, is/are used to determine at least one compensated dimensional variable (e1, e2, e3) or a compensated pressure loss detection variable (DVE).

12. Method according to at least one of the preceding claims, **characterized in that** this method is combined with another method for indirect tyre pressure monitoring, in particular with a method whose pressure loss detection variable (DVE) is a resonance frequency (f) .

13. Method according to Claim 12, **characterized in that** the pressure loss detection is carried out as a function of the vehicle velocity (v) and/or the values of the dimensional variables (e1, e2, e3), in particular the value of a ratio between the dimensional variables, by means of the one or other method for indirect tyre pressure monitoring.

14. Tyre pressure monitoring system in which the wheel rotational speed ($\omega$) of at least one wheel or a variable which is associated with the wheel rotational speed ($\omega$) of the wheel is determined and evaluated for the detection of a tyre pressure loss, **characterized in that** said tyre pressure monitoring system comprises an evaluation means in which a method according to at least one of Claims 1 to 13 is carried out.

**Revendications**

1. Procédé de surveillance indirecte de la pression des pneus ou de détection d'une suspension de roue endommagée, dans lequel, sur la base d'une analyse du comportement en vibration d'une roue d'un véhicule automobile, une grandeur de détection de perte de pression (DVE) est déterminée et, par une comparaison entre une grandeur de détection de perte de pression déterminée actuelle ($DVE_{akt}$) et une grandeur de détection de perte de pression apprise ($DVE_{soll}$), une perte de pression du pneu ou une suspension de roue endommagée est détectée, dans lequel des grandeurs de mesure (e1, e2, e3) sont déterminées à partir d'un signal de vitesse de rotation de roue ($\omega$) de la roue pour au moins trois fréquences et/ou plages de fréquences différentes, lesquelles grandeurs de mesure représentent chacune une mesure pour l'expression d'une fréquence ($f_{Eigen1}$, $f_{Eigen2}$, $f_{Eigen3}$) ou d'une plage de fréquences ($f_{unten}$, $f_{oben}$, $\Delta f_{Eigeni}$) dans le comportement en vibration de la roue, et en ce que les trois grandeurs de mesure (e1, e2, e3), en particulier un rapport de deux grandeurs de mesure (e2/e3), sont utilisées pour la détection de perte de pression et/ou d'endommagements, **caractérisé en ce que** la grandeur de détection de perte de pression (DVE) est formée d'un rapport de deux grandeurs de mesure (e2/e3).

2. Procédé selon la revendication 1, **caractérisé en ce que** la grandeur de détection de perte de pression (DVE) est considérée, en particulier obtenue par apprentissage et évaluée, en fonction de la troisième grandeur de mesure (e1), en particulier d'un rapport de deux grandeurs de mesure (e1/e3), qui comprend la troisième grandeur de mesure (e1).

3. Procédé selon au moins l'une des revendications 1 à 2, **caractérisé en ce que** la grandeur de détection de perte de pression (DVE) est calculée à partir d'un rapport entre les deux grandeurs de mesure (e2/e3) et d'une vitesse de véhicule (v).

4. Procédé selon au moins l'une des revendications 1 à 3, **caractérisé en ce qu'**au moins deux des fréquences ($f_{Eigen1}$, $f_{Eigen2}$) et/ou plages de fréquences ($f_{Eigen1} \pm \Delta f_{Eigen1}/2$, $f_{Eigen2} \pm \Delta f_{Eigen2}/2$) sont sélectionnées de manière à ce que les grandeurs de mesure correspondantes (e1, e2) présentent une variation différente ou un comportement opposé par rapport à leur variation lors d'une perte de pression des pneus et/ou d'endommagements d'une suspension de roue.

5. Procédé selon au moins l'une des revendications 1 à 4, **caractérisé en ce qu'**une grandeur de mesure (e1, e2, e3), en particulier chaque grandeur de mesure, est déterminée par filtrage du signal de vitesse de roue ($\omega$) au moyen d'un filtre passe-bande (BP).

6. Procédé selon la revendication 5, **caractérisé en ce que** la grandeur de mesure (e1, e2, e3) est obtenue à partir de la variance (8) du signal filtré, en particulier après filtrage des valeurs moyennes (9).

7. Procédé selon au moins l'une des revendications 1 à 4, **caractérisé en ce que**

   - une grandeur de mesure (e1, e2, e3), en particulier chaque grandeur de mesure, est une valeur d'amplitude (G) d'un spectre de fréquences du signal de vitesse de roue ($\omega$) à une fréquence prédéterminée ou spécifique ($f_{Eigen1}$, $f_{Eigen2}$, $f_{Eigen3}$), ou

- une grandeur de mesure (e1, e2, e3), en particulier chaque grandeur de mesure, est déterminée par intégration ou moyennage des valeurs d'amplitude (G) d'un spectre de fréquences du signal de vitesse de roue ($\omega_1$) dans une plage de fréquences prédéterminée ou spécifique ($f_{Eigeni} \pm \Delta f_{Eigeni}/2$).

8. Procédé selon au moins l'une des revendications précédentes, **caractérisé en ce que** les fréquences et/ou plages de fréquences considérées sont des fréquences de résonance de la vibration de roue et/ou des plages de fréquences centrées sur des fréquences de résonance de la vibration de roue, dans lequel une fréquence de résonance, en particulier toutes les fréquences de résonance,

    - est/sont prédéterminée(s), ou
    - est/sont déterminée(s) à partir d'un spectre de fréquences déterminé du signal de vitesse de roue ($\omega$), et/ou
    - est/sont déterminée(s) à partir de paramètres d'au moins un modèle ou d'au moins une équation basée sur un modèle, dans lequel les paramètres du modèle sont déterminés par estimation de paramètres au moyen d'une évaluation du signal de vitesse de roue ($\omega$).

9. Procédé selon au moins l'une des revendications précédentes, **caractérisé en ce qu'**au moins une dépendance entre

    - une grandeur de mesure (e1, e2, e3) et une autre grandeur de mesure (e1, e2, e3),
    - un rapport de grandeurs de mesure (e2/e3), en particulier la grandeur de détection de perte de pression (DVE), et un autre rapport de grandeurs de mesure (e1/e3),
    - une grandeur de mesure (e1, e2, e3) et une vitesse de véhicule (v),
    - un rapport de grandeurs de mesure (e2/e3), en particulier la grandeur de détection de perte de pression (DVE), et une vitesse du véhicule (v),
    - une grandeur de mesure (e1, e2, e3) et une température (T), et
    - un rapport entre des grandeurs de mesure (e2/e3), en particulier la grandeur de détection de perte de pression (DVE), et une température (T), est obtenu par apprentissage et pris en compte.

10. Procédé selon la revendication 9, **caractérisé en ce que** la dépendance est prédéterminée ou déterminée sous la forme d'une relation fonctionnelle (g) entre l'une (X) et l'autre grandeur (Y), ou **en ce que** la dépendance est prise en compte par apprentissage et comparaison de ladite grandeur dans des intervalles de valeurs de l'autre grandeur.

11. Procédé selon la revendication 9 ou 10, **caractérisé en ce que** ladite au moins une dépendance, en particulier toutes les dépendances, est/sont utilisée(s) pour déterminer au moins une grandeur de mesure (e1, e2, e3) compensée ou une grandeur de détection de perte de pression (DVE) compensée.

12. Procédé selon au moins l'une des revendications précédentes, **caractérisé en ce qu'**il est combiné à un autre procédé de surveillance indirecte de la pression des pneus, en particulier au moyen d'un procédé dont la grandeur de détection de perte de pression (DVE) est une fréquence de résonance (f).

13. Procédé selon la revendication 12, **caractérisé en ce que** la détection de perte de pression est effectuée par l'un ou l'autre procédé de surveillance indirecte de la pression des pneus, en fonction de la vitesse de véhicule (v) et/ou des valeurs des grandeurs de mesure (e1, e2, e3), en particulier de la valeur d'un rapport des grandeurs de mesure.

14. Système de surveillance de la pression des pneus dans lequel la vitesse de rotation de roue ($\omega$) d'au moins une roue ou une grandeur liée à la vitesse de rotation de roue ($\omega$) de la roue est déterminée et est évaluée pour détecter une perte de pression des pneus, **caractérisé en ce qu'**il comprend un moyen d'évaluation dans lequel est mis en oeuvre un procédé selon au moins l'une des revendications 1 à 13.

# Fig. 1

# Fig. 2

# Fig. 3

# Fig. 4

# Fig. 5

## Fig. 6

$m_R$

$z_R$

$z_S$

n

$F_z$

## Fig. 7

|G|

0.050
0.045
0.040
0.035
0.030
0.025
0.020
0.015
0.010
0.005
0

10  20  30  40  50  60  70  80  90  100  110  120   f [Hz]

20

$f_{eigen1}$    21  $f_{eigen2}$    $f_{eigen3}$

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10058140 A1
- EP 0578826 B1
- DE 102005004910 A1
- WO 03031990 A1
- EP 1260389 A1
- US 5553491 A
- US 20020059826 A1